(19) Europäisches Patentamt
European Patent Office
Office européen des brevets

(11) EP 1 367 567 A2

(12) **EUROPEAN PATENT APPLICATION**

(43) Date of publication:
**03.12.2003 Bulletin 2003/49**

(51) Int Cl.$^7$: **G11B 5/72**

(21) Application number: **03012130.5**

(22) Date of filing: **30.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.05.2002 JP 2002157510**

(71) Applicant: **FUJI PHOTO FILM CO., LTD**
**Fujinomiya-shi, Kanagawa (JP)**

(72) Inventors:
- **Ejiri, Kiyomi, Fuji Photo Film Co., Ltd. Kanagawa (JP)**
- **Inoue, Noriko, Fuji Photo Film Co., Ltd. Kanagawa (JP)**

(74) Representative: **HOFFMANN - EITLE**
**Patent- und Rechtsanwälte**
**Arabellastrasse 4**
**81925 München (DE)**

(54) **Magnetic recording medium**

(57) Amagnetic recording medium comprising a magnetic layer, a flexible support and a backing layer in this order, wherein the backing layer comprises: a non-magnetic inorganic particle having an acicular ratio of from 3 to 15; and a carbon black having an average particle size of from 10 to 50 nm in a mass ratio of A/B = from 60/40 to 90/10, and the backing layer has a glass transition point of from 80 to 140°C.

EP 1 367 567 A2

## Description

### FIELD OF THE INVENTION

The present invention relates to a magnetic recording medium capable of high density recording excellent in electromagnetic characteristics and running durability.

### BACKGROUND OF THE INVENTION

Magnetic recording media are widely used as the recording media of all sorts of data, such as sounds, images and characters. In recent years, there arises a need for high density recording corresponding to the improvements of data-recording capacity and transfer speed, so that a magnetic recording medium having high electromagnetic characteristics is required. Further, the reliability at the time when data are repeatedly used and saved is also required at the same time. Accordingly, good running durability is also required of a magnetic recording medium in addition to excellent electromagnetic characteristics. For that sake, particularly in tape media, the improvement of running durability is contrived by providing a backing layer. To improve running durability by a backing layer, providing pimples on the surface of a support, or roughening the surface of a backing layer by adding coarse carbon having a particle size of 0.1 µm or more have been tried. However, if the surface of a backing layer is roughened by these methods, when a magnetic recording tape is wound onto ahub forpreservation or processing, the backing layer and a magnetic layer are tightly pressed and the pimples of the backing layer are impressed on the magnetic layer, i.e., so-called "setoff", is caused. As a result, a drawback such that electromagnetic characteristics are deteriorated arises. For solving such "setoff", it is tried to smooth the surface of a backing layer surface. However, when the surface of a backing layer is smoothed, the friction coefficient against the guides of a tape drive and the like becomes great and running stability lowers. Therefore, it is tried to add a relatively large amount of lubricant to a backing layer for reducing the friction coefficient. However, the viscosity of the backing layer surface increases when a great amount of lubricant is used, which causes other problems such that the lubricant makes the guide dirty, or a magnetic layer adheres to the backing layer when the medium is preserved for a long period of time in a wound state. Thus, it is necessary to further improve a backing layer for manufacturing a magnetic recording tape excellent in electromagnetic characteristics and running stability.

In tapes for computer storage in recent years, it is required to further lessen the thickness of a tape at large for increasing the capacity of a magnetic recording medium. For thinning the thickness of a magnetic recording tape, it has been performed to decrease the thickness of a flexible support, or decrease the thickness of a nonmagnetic layer provided between a flexible support and a magnetic layer of a coating type magnetic recording tape. However, running durability lowers if the thickness of a flexible support is thinned to less than a certain range, and if a nonmagnetic layer is thinned, output lowers, an error rate increases and dropout rises. A backing layer cannot be excluded for maintaining a good running property. Further, when the thickness of a backing layer is thinned, the adhesion strength between the backing layer and the support lowers, as a result, the backing layer peels off during running, or the pimples on the surface of the backing layer are impressed onto the magnetic layer, so that noise increases and S/N ratio decreases. An aramid base is used as a flexible support in a thinner tape, but dropping out and peeling off at the edge of a backing layer during running are conspicuous in an aramidbase as compared with conventionally used polyester bases, e.g., polyethylene terephthalate (PET) and polyethylene naphthalate (PEN). Further, the strength in the width direction of a thin magnetic recording tape is maintained by increasing the Young's modulus in the width direction of a flexible support to thereby ensure running durability, but when a broad magnetic recording tape is slit into a prescribed width, the end face of a backing layer (i.e., an end face newly formed by slitting) drops out.

A conventional magnetic recording tape in which the improvement of electromagnetic characteristics has been contrived by improving so-called setoff by smoothing a backing layer is accompanied by problems such that the friction coefficient of the backing layer increases during repeating running or the backing layer is scratched. To cope with these problems, it is disclosed in JP-A-11-259851 (the term "JP-A" as used herein means an "unexamined published Japanese patent application") to add to a backing layer a mixture of particulate titanium oxide and carbon black as a main ingredient, a binder, fatty acid and fatty acid ester as a lubricant, and alumina as an abrasive. However, by the addition of a lubricant, the binder used in the backing layer is plasticized and the backing layer is adhered to the magnetic layer when themedium is preserved for a long time under high temperature . When a binder containing, in particular, a chlorine, e.g., a vinyl chloride resin, is used, the hydrolysis of the lubricant and the binder is accelerated, so that the adhesion becomes conspicuous.

Thus, the prior art techniques cannot yet provide a magnetic recording tape having satisfactory electromagnetic characteristics and running durability. In particular, in these days of being required of thinning of a magnetic recording tape at large, a satisfactory a magnetic recording tape is not provided yet, although a magnetic recording tape excellent in electromagnetic characteristics and running durability is required.

## SUMMARY OF THE INVENTION

An object of the present invention is to solve the problems of prior art techniques and provide a magnetic recording medium which is capable of high density recording, hardly generates the setoff of a backing layer to a magnetic layer, exhibits good electromagnetic characteristics, storage stability and running durability.

As a result of eager investigation for achieving the above object, the present inventors have found that a magnetic recording medium having a smooth backing layer surface, hardly generating the setoff, and excellent in electromagnetic characteristics, running durability and storage stability can be achieved by a magnetic recording medium comprising a flexible support having a magnetic layer on one side and a backing layer on the opposite side of the support, wherein the backing layer contains nonmagnetic inorganic particle A having an acicular ratio of from 3 to 15 and carbon black B having an average particle size of from 10 to 50 nm in the ratio of A/B = from 60/40 to 90/10 (mass ratio (weight ratio)), and the glass transition point Tg of the backing layer is from 80 to 140°C.

The preferred embodiments of the present invention are as follows.

In the first place, durability can be further improved without deteriorating setoff by adding to the backing layer an abrasive having a Moh's hardness of 9 or more and an average particle size of from 10 to 40% of the backing layer thickness. In the second place, storage stability and smoothness can be improved simultaneously by using, as a binder, polyurethane containing no chlorine and having a Tg of from 80 to 140°C obtained by the reaction of diol having a cyclic structure to achieve a Tg of from 80 to 140°C, diol containing an ether group, and organic diisocyanate.

## DETAILED DESCRIPTION OF THE INVENTION

The thickness of a backing layer is generally set at 1 μm or less for making a tape thickness thin, but the effect of calendering treatment is small with a thin layer and a smooth surface is obtained with difficulty. Film-forming becomes further difficult when a coating layer having a high Tg is used for preventing adhesion due to preservation.

Accordingly, in the invention, by mixing nonmagnetic inorganic particle A having a specific acicular ratio, i.e., an acicular ratio of from 3 to 15 (hereinafter referred to as acicular nonmagnetic inorganic particle A) , and carbon black B having an average particle size of from 10 to 50 nm in the ratio of A/B = from 60/40 to 90/10 (mass ratio), the layer formability is improved, thereby smoothness, durability and storage stability are improved at the same time.

The magnetic recording medium of the invention widely includes those comprising a flexible support having a magnetic layer on one side and a backing layer on the opposite side of the support. Accordingly, magnetic recording media having layers other than a magnetic layer and a backing layer are also included in the magnetic recording medium of the invention. For example, they can have a nonmagnetic layer containing nonmagnetic powder, a soft magnetic layer containing soft magnetic powder, a second magnetic layer, a cushioning layer, an overcoat layer, an adhesion layer and a protective layer. These layers can be provided at appropriate places so that their functions can be effectively exhibited. A magnetic recording medium having a nonmagnetic layer containing nonmagnetic inorganic powder and a binder between a flexible support and a magnetic layer is preferred as the magnetic recording medium of the invention. A magnetic layer can have a layer thickness of, for example, generally from 0.01 to 1 μm, preferably from 0.03 to 0.5 μm, and more preferably from 0.03 to 0.2 μm, and a nonmagnetic layer can have a layer thickness of generally from 0.5 to 3 μm, and preferably from 0.8 to 3 μm. The layer thickness of a nonmagnetic layer is preferably thicker than the thickness of a magnetic layer. A magnetic recording medium having two magnetic layers is also preferably used in the invention. In this case, the upper layer thickness may be generally from 0.2 to 2 μm, preferably from 0.2 to 1.5 μm, and the lower layer thickness may be generally from 0.8 to 3 μm. When a magnetic layer comprises a single layer, the layer thickness of the magnetic layer is generally from 0.1 to 5 μm, preferably from 0.1 to 3 μm, and more preferably from 0.1 to 1.5 μm. When a soft magnetic layer is provided between a flexible support and a magnetic layer, the magnetic layer thickness may be generally, e.g., from 0.03 to 1 μm, preferably from 0.05 to 0.5 μm, and the soft magnetic layer thickness may be generally from 0.8 to 3 μm. With respect to the magnetic layer, not only a so-called coating type magnetic layer containing ferromagnetic powder dispersed in a binder but a thin film type magnetic layer formed by vacuum evaporation or sputtering may be used. The thin film type magnetic layer has a layer thickness of generally from 0.05 to 0.3 μm, and preferably from 0.1 to 0.2 μm. The thickness of a backing layer formed in the magnetic recording medium of the invention is generally from 0.05 to 1.0 μm, preferably from 0.1 to 0.8 μm, and more preferably from 0.2 to 0.6 μm.

Nonmagnetic inorganic particle A having an acicular ratio of from 3 to 15 is used in a backing layer of the magnetic recording medium of the invention. The acicular ratio is preferably from 4 to 10. The acicular ratio in the invention is a value obtained by dividing the long axis length of a particle by the short axis length. The short axis length means the maximum length of the orthogonal secion of the long axis. The long axis length is from 30 to 500 nm, preferably from 50 to 300 nm, and more preferably from 50 to 200 nm. When the acicular ratio is smaller than 3, the voids in the coated layer decrease and the film-forming effect by calendering is damaged, while when it is greater than 15, surface roughness increases and setoff is deteriorated. As the nonmagnetic powders, metallic oxides, e.g., titanium

oxide, alpha-iron oxide, $SiO_2$, $SnO_2$, $WO_3$, $Al_2O_3$, $ZrO_2$ and ZnO, $BaSO_4$, salts, e.g., barium titanate, and metallic whiskers of, e.g., Cu and Al can be used. Oxides which are excellent in chemical stabilization are preferably used as the nonmagnetic powders. These nonmagnetic powders can be used as mixture.

Carbon black B having an average particle size of from 10 to 50 nm, preferably from 10 to 40 nm, is used in the backing layer of the magnetic recording medium of the present invention as the mixture with the above acicular nonmagnetic inorganic particle A in the mass ratio of A/B of from 60/40 to 90/10, preferably 70/30 to 90/10. An average particle size here means the arithmetic mean of the particle sizes of independent particles free of agglomeration. When the average particle size of carbon black B is greater than 50 nm, voids decrease due to the undevelopment of structure and the film-forming effect by calendering is damaged, and electric conduction also lowers. When the average particle size is smaller than 10 nm, severe agglomeration occurs and pimples are formed on the backing layer surface (hereinafter also referred to as back surface) When the ratio of A is higher than the above mixing ratio, the film-forming effect is damaged and a problem of electrostatic charge arises, and when the ratio of A is lower than the above mixing ratio, dispersibility deteriorates.

Further, it is preferred to add carbon black having an average particle size of 80 nm or more to a backing layer as a solid lubricant. The addition amount of such carbon black is from 0.1 to 10 mass parts (parts by weight) when the total amount of A and B is taken as 100 mass parts, preferably from 0.3 to 5 mass parts. If too large an amount is used, pimples on the back surface increase and setoff becomes conspicuous.

Carbon blacks have pH of from 2 to 10, a water content of from 0.1 to 10%, and a tap density of from 0.1 to 1 g/ml. Carbon blacks having an average particle size of from 10 to 50 nm have a specific surface area of generally from 100 to 500 $m^2/g$, preferably from 150 to 400 $m^2/g$, and DBF oil absorption of generally from 20 to 400 ml/100 g, and preferably from 30 to 200 ml/100 g. The specific examples of carbon blacks having an average particle size of from 10 to 50 nm for use in the present invention include BLACK PEARL S2000, S1300, S1000, S900, S800, S880 and S700, and VULCAN XC-72 (manufactured by Cabot Co., Ltd.), #3050B, #3150B, #3250B, #3750B, #3950B, #950, #650B, #970B and #850B, and MA-600 (manufactured by Mitsubishi Kasei Corp.), CONDUCTEX SC, RAVEN 8800, 8000, 7000, 5750, 5250, 3500, 2100, 2000, 1800, 1500, 1255 and 1250 (manufactured by Columbia Carbon Co., Ltd.), and Ketjen Black EC (manufactured by Akzo Co., Ltd.). Carbon blacks having an average particle size of 80 nm or more have a specific surface area of generally from 5 to 100 $m^2/g$, preferably from 5 to 30 $m^2/g$, and DBP oil absorption of generally from 20 to 120 ml/100 g, and preferably from 30 to 110 ml/100 g, and the specific examples include #55, #50 and #30 (manufactured by Asahi Carbon Co., Ltd.), RAVEN 450 and 430 (manufactured by Columbia Carbon Co. , Ltd.), and THERMAX MT (manufactured by Cancarb Co., Ltd.).

As the binder for abacking layer of the present invention, well-known thermoplastic resins, thermo-setting resins and reactive type resins can be used. The examples of preferred binders include cellulose resins not containing a chlorine, e.g., nitrocellulose, a phenoxy resin and a polyurethane resin. Of these resins, polyurethane resins having a Tg of from 80 to 140°C are more preferably used for improving storage stability. Particularly preferred polyurethane resins are polyurethane resins obtained by the reaction of diol and organic diisocyanate and the diol comprises from 17 to 40 mass% (weight%) of short chain diol having a cyclic structure based on the polyurethane, and from 10 to 50 mass% of long chain diol having an ether bond, and contains from 1.0 to 5.0 mol/g of the ether bond in the long chain diol based on the polyurethane. The polyurethane resin is described below.

The short chain diols have a molecular weight of from 50 to less than 500, more preferably from 100 to 300. The specific examples of the short chain diols include aromatic or alicyclic diol, e.g., cyclohexane-1,4-diol, cyclohexane-1,4-dimethanol, bisphenol A, hydrogenated bisphenol A, bisphenol S, bisphenol P, ethylene oxide adducts of these short chain diols, propylene oxide adduct of these short chain diols, cyclohexanedimethanol, and cyclohexanediol. The long chain diols have a molecular weight of from 500 to 5,000. The specific examples of the long chain diols include ethylene oxide adducts of bisphenol A and hydrogenated bisphenol A, and propylene oxide adducts of bisphenol A and hydrogenated bisphenol A, each having a molecular weight of from 500 to 5,000. The preferred short chain diol and long chain diol are represented by the following formula (1) :

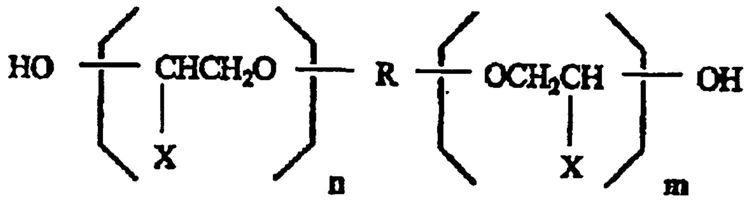

(1)

In the case of short chain diol, m and n are selected so that the molecular weight of the short chain diol becomes 50 or more and less than 500, and generally m and n are from 0 to 3.

In the case of long chain diol, m and n are selected so that the molecular weight of the long chain diol becomes from 500 to 5,000, and generally m and n are from 3 to 24, preferably from 3 to 20, and more preferably from 4 to 15. When m and n are greater than 24, a backing layer softens and running durability lowers.

X preferably represents a hydrogen atom or a methyl group, and more preferably a methyl group. X's parenthesized by m and n need not be the same and a hydrogen atom and a methyl group may be mixed.

R represents the residue of bisphenol A or hydrogenated bisphenol A. Of the short diols represented by formula (1), bisphenol A, hydrogenated bisphenol A, ethylene oxide adducts of bisphenol A and hydrogenated bisphenol A, and propylene oxide adducts of bisphenol A and hydrogenated bisphenol A are preferred.

The preferred long chain diols are diols having a molecular weight of from 500 to 5,000 derived from bisphenol A or hydrogenated bisphenol A, and particularly preferred long chain diols are propylene oxide adducts of bisphenol A. The short chain diol content is generally from 17 to 40 mass% based on the polyurethane resin, and preferably from 20 to 30 mass%. The long chain diol content is generally from 10 to 50 mass%, and preferably from 30 to 40 mass%. The ether group in the long chain diol unit is generally contained from 1.0 to 5.0 mmol/g in the polyurethane resin, and more preferably from 2.0 to 4.0 mmol/g. By using such a polyurethane resin as the binder of a backing layer, more excellent adhesion to powders, dispersibility and solubility in a solvent can be obtained.

Diols other than the above short chain and long chain diols can be used in the present invention. Specifically, aliphatic diol, e.g., ethylene glycol, 1,3-propylene diol, 1,2-propylene glycol, 1,4-butanediol, 1,5-pentanediol, 1,6-hexanediol, 2,2-dimethylpropanediol, 1,8-octanediol, 1,9-nonanediol and diethylene glycol, and ethylene oxide adducts or propylene oxide adducts of N-diethanolamine.

The examples of organic diisocyanate compounds to be reacted include aromatic diisocyanate, e.g., 2,4-tolylene diisocyanate, 2,6-tolylene diisocyanate, xylene-1,4-diisocyanate, xylene-1,3-diisocyanate, 4,4'-diphenylmethane diisocyanate, 4,4-diphenyl ether diisocyanate, 2-nitrodiphenyl-4,4'-diisocyanate, 2,2'-diphenylpropane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate, aliphatic diisocyanate, e.g., lysine diisocyanate, and alicyclic diisocyanate, e.g., isophorone diisocyanate, hydrogenated tolylene diisocyanate, and hydrogenated diphenylmethane diisocyanate.

Since the polyurethane resin obtained by reaction has a cyclic structure, the strength, Tg and durability of a backing layer prepared by using the polyurethane resin become higher. Further, by introducing a branchedmethyl group, the solubility in a solvent increases, thus dispersibility is improved. Tg of the polyurethane resin is preferably from 80 to 140°C, and more preferably from 90 to 130°C. The binder composition must be adjusted so that Tg of a backing layer can be set at from 80 to 140°C, preferably from 90 to 130°C, and the film strength and the storage stability can be improved whether the cyclic moiety of the long chain diol is aliphatic or aromatic. The binder of a backing layer is generally hardened by a polyisocyanate compound (a hardening agent). The use amount of a hardening agent is preferably from 0 to 150 mass parts (parts by weight), preferably from 0 to 100 mass parts, and more preferably from 0 to 50 mass%, per 100 mass parts of the polyurethane resin. The content of hydroxyl groups in the polyurethane resin is preferably from 3 to 20, andmore preferably from 4 or 5, per a molecule. When the number of hydroxyl groups is less than 3 per a molecule, the reactivity with the polyisocyanate lowers, thus film strength and durability are liable to lower. When hydroxyl groups are more than 20 per a molecule, the solubility in a solvent and the dispersibility are liable to lower. For adjusting the hydroxyl group content in the polyurethane resin, a compound having a trifunctional or higher functional hydroxyl group can be used. Specifically, the hydroxyl group content can be adjusted by bonding to prepared polyurethane a proper amount of trifunctional or higher polyol, e.g., trimethylolethane, trimethylolpropane, glycerol, pentaerythritolorhexanetriol, a proper amount of trifunctional or higher branched polyester polyol, e.g., the one disclosed in JP-B-6-64726 (the term "JP-B" as used herein means an "examined Japanese patent publication") obtained

by synthesizing by using diol or diol and dicarboxylic acid as main ingredient(s) and a prescribed amount of trifunctional or higher polyol, e.g., the above trifunctional or higher polyol or trimellitic anhydride, or a proper amount of trifunctional or higher branched polyether polyol or polyether polyester polyol. The hydroxyl group content can also be adjusted by using the branched polyol as the starting material of polyurethane resin. Of the above trifunctional or higher compounds, a trifunctional compound is preferred. When a tetrafunctional or higher compound is used, gelation is liable to occur during the reaction.

The polyurethane resin preferably contains at least one polar group selected from the following groups in the molecule, e.g., $-SO_3M$, $-OSO_3M$, -COOM, $-PO_3MM'$, $-OPO_3MM'$, -NRR' and $-N^+RR'R''COO^-$ (wherein M and M' each represents a hydrogen atom, an alkaline metal, an alkaline earth metal or ammonium, Rand R' each represents an alkyl group having from 1 to 12 carbon atoms, and R" represents an N-bonded alkylene group having from 1 to 12 carbon atoms), and $-SO_3M$ and $-OSO_3M$ are particularly preferred. The addition amount of these polar groups is preferably from $1x10^{-5}$ to $2x10^{-4}$ eq/g, and particularly preferably from $5x10^{-5}$ to $1x10^{-4}$ eq/g. When the amount is less than $1x10^{-5}$ eq/g, the adsorption onto powder becomes insufficient, thus dispersibility is liable to lower, and when the amount is more than $2x10^{-4}$ eq/g, the solubility in a solvent lowers, thus the dispersibility is liable to lower.

Polyurethane resins preferably have a number average molecular weight (Mn) of preferably from 5,000 to 100,000, more preferably from 10,000 to 50,000, and particularly preferably from 20,000 to 40,000. When the number average molecular weight is less than 5,000, film strength and durability are low. When it is more than 100,000, solubility in a solvent and dispersibility are liable to lower. The cyclic structure of polyurethane resins contributes to stiffness and ether group contributes to flexibility. The above polyurethane resins are high in solubility, great in radius of inertia (molecular spread) , and the dispersibility of the powder is good. Further, the polyurethane resins possess not only the stiffness of the resin themselves (high Tg and high Young's modulus) but flexibility (elongation).

A backing layer of the magnetic recording medium of the invention can contain a lubricant generally having a melting point of 80°C or lower, preferably from 20 to 80°C, and more preferably from 0 to 65°C.

For example, by adding fatty acid to a backing layer as a lubricant, rising of a friction coefficient during repeating running can be prevented. As the fatty acids, a monobasic fatty acid having from 8 to 18 carbon atoms are exemplified. The specific examples of the fatty acids include a lauric acid, a caprylic acid, a myristic acid, a palmitic acid, a stearic acid, an oleic acid, a linoleic acid, a linolenic acid and an elaidic acid.

The scratch resistance during high speed running can be improved by adding fatty acid ester to a backing layer. The examples of fatty acid esters include mono-fatty acid esters , di-fatty acid esters or tri-fatty acid esters comprising a monobasic fatty acid having from 10 to 24 carbon atoms and any one of mono-, di-, tri-, tetra-, penta- and hexa-alcohols having from 2 to 12 carbon atoms (which may contain an unsaturated bond or may be branched). The specific examples of these fatty acid esters include butyl stearate, octyl stearate, amyl stearate, isooctyl stearate, octyl myristate, butoxyethyl stearate, anhydrosorbitan monostearate, anhydrosorbitan distearate and anhydrosorbitan tristearate. The addition amount of fatty acid or fatty acid ester is preferably from 0.1 to 5 mass parts, and more preferably from 0.1 to 3 mass parts, with the total amount of acicular nonmagnetic inorganic particle A and carbon black B as 100 mass parts.

The rising of friction coefficient can also be inhibited by adding an aromatic organic acid compound and a titanium coupling agent to a backing layer, to thereby improve dispersibility and heighten the strength. Further, the rising of friction coefficient can be inhibited with organic powder, to thereby reduce the setoff.

A backing layer can also use nonmagnetic inorganic particles having an acicular ratio of 1, i.e., particulate particles, in combination.

Durability can be further improved by adding to a backing layer an abrasive having a Moh's hardness of 9 or more and an average particle size of from 10 to 40% of the backing layer thickness. As the abrasives, alpha-alumina, chromium oxide, artificial diamond, and carbon-modified boron nitride (CBN) can be exemplified. Above all, it is preferred to use abrasives having an average particle size of 0.3 μm or less and from 10 to 40% of the backing layer thickness. When the average particle size is smaller than 10%, the abrasive particles are buried in the backing layer and the role as the abrasive is not very useful, while when it is greater than 40%, pimples increase and setoff is liable to be deteriorated.

The ferromagnetic powders which are used in a magnetic layer of the magnetic recording medium in the present invention are a ferromagnetic iron oxide, a cobalt-containing ferromagnetic iron oxide, barium ferrite powder and ferromagnetic metal powder. These ferromagnetic powders have a specific surface area ($S_{BET}$) measured by the BET method of generally from 40 to 80 $m^2/g$, preferably from 50 to 70 $m^2/_g$, a crystallite size of generally from 12 to 25 nm, preferably from 13 to 22 nm, and particularly from 14 to 20 nm, a long axis length of generally from 0.05 to 0.25 μm, preferably from 0.07 to 0.2 μm, and particularly preferably from 0.08 to 0.15 μm, and pH of preferably 7 or more . The examples of the ferromagnetic metal powders include simple metal powders or alloys, e.g., Fe, Ni, Fe-Co, Fe-Ni, Co-Ni and Co-Ni-Fe. The ferromagnetic metal powders can contain the following metals in the proportion of 20 mass% or less of the metal ingredients : aluminum, silicon, sulfur, scandium, titanium, vanadium, chromium, manganese, copper, zinc, yttrium, molybdenum, rhodium, palladium, gold, tin, antimony, boron, barium, tantalum, tungsten, rhenium,

silver, lead, phosphorus, lanthanum, cerium, praseodymium, neodymium, tellurium and bismuth. Further, the ferromagnetic metal powders may contain a small amount of water, a hydroxide or an oxide. The producing methods of these ferromagnetic powders are well-known, and the ferromagnetic powders for use in the present invention can also be produced according to well-known methods. The figures of the ferromagnetic powders are not particularly limited, and any figure such as an acicular, granular, die-like, ellipsoidal and tabular figures can be used in the present invention. Acicular ferromagnetic powders are particularly preferably used. In the present invention, a magnetic layer-forming coating solution is produced by kneading and dispersing a binder, a hardening agent and ferromagnetic powder with a solvent generally used in preparing a magnetic coating solution, e. g. , methyl ethyl ketone, dioxane, cyclohexanone or ethyl acetate. Kneading and dispersing can be performed according to ordinary methods. In addition to the above ingredients, amagnetic layer-forming coating solution may contain generally-used additives and fillers, such as abrasives, e.g. , alpha-$Al_2O_3$ and $Cr_2O_3$, antistatic agents, e.g. carbon black, lubricants, e.g., fatty acid, fatty acid ester and silicone oil, and dispersants.

In the next place, a lower nonmagnetic layer or a lower magnetic layer (hereinafter a lower nonmagnetic layer or a lower magnetic layer is also referred to as a lower layer) present in the case where the magnetic recording medium of the invention has multilayer constitution is described below. The inorganic powders used in a lower layer may be magnetic powder or nonmagnetic powder. For example, the nonmagnetic powder can be selected from inorganic compounds, e. g., metallic oxide, metallic carbonate, metallic sulfate, metallic nitride, metallic carbide and metallic sulfide, and nonmagnetic metals. The examples of the inorganic compounds are selected from the following compounds and they can be used alone or in combination, e.g., titanium oxides ($TiO_2$, TiO), alpha-alumina having an alpha-conversion rate of from 90% to 100%, beta-alumina, gamma-alumina, alpha-iron oxide, chromium oxide, zinc oxide, tin oxide, tungsten oxide, vanadium oxide, silicon carbide, cerium oxide, corundum, silicon nitride, titanium carbide, silicon dioxide, magnesium oxide, zirconium oxide, boron nitride, calcium carbonate, calcium sulfate, barium sulfate, molybdenum disulfide , goethite and aluminum hydroxide. Of these compounds , titanium dioxide, zinc oxide, iron oxide and barium sulfate are particularly preferred, and titanium dioxides disclosed in JP-A-5-182177, and alpha-iron oxides disclosed in JP-A-6-60362 and JP-A-9-170003 are more preferred. As the nonmagnetic metals, Cu, Ti, Zn and Al can be exemplified. These nonmagnetic powders preferably have an average particle size of from 0.005 to 2 μm. A plurality of nonmagnetic powders each having a different particle size may be combined, if necessary, or a single nonmagnetic powder having a broad particle size distribution may be used so as to obtain the same effect as such a combination. Particularly preferred nonmagnetic powders are those having an average particle size of from 0.01 to 0.2 μm. Nonmagnetic powders have a pH value of particularly preferably from 6 to 9, a specific surface area ($S_{BET}$) of from 1 to 100 $m^2$/g, preferably from 5 to 50 $m^2$/g, and more preferably from 7 to 40 $m^2$/g, a crystallite size of preferably from 0.01 to 2 μm, an oil absorption amount using DBP of from 5 to 100 ml/100 g, preferably from 10 to 80 ml/100 g, and more preferably from 20 to 60 ml/100 g, and a specific gravity of from 1 to 12 , andpreferably from 3 to 6 . The figure of nonmagnetic powders may be any of acicular , spherical, polyhedral and tabular figures.

As the soft magnetic powders, particulate Fe, Ni, particulate magnetite, Fe-Si, Fe-Al, Fe-Ni, Fe-Co, Fe-Co-Ni, Fe-Al-Co (Sendust) alloys, Mn-Zn ferrite, Ni-Zn ferrite, Mg-Zn ferrite, Mg-Mn ferrite, and other soft magnetic powders described in Fusanobu Chikazumi, Kyojiseitai no Butsuri (Ge) (Physics of Ferromagnetic Substances (the last volume) ) , "Jiki Tokusei to Oyo (Magnetic Characteristics and Applications)", pp. 368 to 376, Shokabo Co. (1984) are exemplified. It is preferred that at least apart of the surfaces of these nonmagnetic powders and soft magnetic powders are covered with any of $Al_2O_3$, $SiO_2$, $TiO_2$, $ZrO_2$, $SnO_2$, $Sb_2O_3$ and $ZnO_2$, of these compounds, $Al_2O_3$, $SiO_2$, $TiO_2$ and $ZrO_2$ are especially preferred in the point of capable of exhibiting good dispersibility, and $Al_2O_3$, $SiO_2$ and $ZrO_2$ are further preferred. They may be used alone or in combination. Further, surface treatment of particles may be performed by coprecipitation, alternatively, surface treatment may be performed to be covered with alumina in the first place, then the alumina-covered surface may be covered with silica, or vice versa, according to purposes. A surface-covered layer maybe porous, if necessary, but a homogeneous and dense surface is generally preferred.

By incorporating carbon blacks into a lower layer, surface electrical resistance (Rs) can be reduced and a desired micro Vickers hardness can be obtained. The average particle size of carbon blacks is generally from 5 to 80 nm, preferably from 10 to 50 nm, and more preferably from 10 to 40 nm. Specifically, the carbon blacks which can be used in the above-described backing layer can be used in a lower layer. Further, magnetic powders can also be used in the lower layer of the present invention as inorganic powder. As the magnetic powders,gamma-$Fe_2O_3$, Co-modified gamma-$Fe_2O_3$, and alloys comprising alpha-Fe as the main component, and $CrO_2$ are used. The magneticpowder for the lower layer can be selected according to the purpose, and the effect of the present invention does not depend upon the kinds of magnetic powders. However, as is well known, the performances may be varied in the upper layer and the lower layer. For example, to improve long wave recording characteristics, it is preferred to set He of the lower magnetic layer at a lower value than He of the upper magnetic layer, and it is effective to make Br of the lower magnetic layer higher than Br of the upper magnetic layer. Other than the above means, advantages can be given by using well-known multilayer structures. The binders, lubricants, dispersants, additives, solvents, dispersing methods, and the like described in the above magnetic layer can be used in the lower magnetic layer and the lower nonmagnetic layer. In

particular, with respect to the amounts and the kinds of binders, additives, and the amounts and the kinds of dispersants, well-known techniques regarding the magnetic layer can be applied to the lower layer of the present invention.

As the flexible supports which can be used in the present invention, biaxially stretched polyethylene naphthalate (PEN) , polyethylene terephthalate (PET), polyamide, polyimide, polyamideimide, aromatic polyamide, and polybenzoxazole are exemplified. These nonmagnetic supports may be subjected to surface treatments in advance, e. g. , corona discharge treatment, plasma treatment, adhesion assisting treatment and heat treatment. The nonmagnetic supports which can be used in the present invention have a central line average surface roughness (at a cut-off value of 0.25 mm) of generally from 0.1 to 20 nm, preferably from 1 to 10 nm, andpreferably have excellent surface smoothness. It is preferred that these nonmagnetic supports not only have a small central line average surface roughness but are free of coarse pimples of 1 µm or more. The thickness of the nonmagnetic support is from 4 to 15 µm, and preferably from 4 to 9 µm. When the thickness of the nonmagnetic support is thin, since the concavities and convexities of the backing layer are liable to be impressed on the magnetic layer due to handling tension, the setoff can be effectively prevented by using the polyurethane resin as the uppermost layer. When the thickness of the nonmagnetic support is 7 µm or less, PEN or aromatic polyamide such as aramid is preferably used as the support. Aramid is most preferred.

The magnetic recording medium of the present invention can be manufactured by, e.g., vacuum evaporating or coating a coating solution on the surface of a nonmagnetic support under running so that the dry thickness of the layer comes into the prescribed range. A plurality of magnetic coating solutions or nonmagnetic coating solutions can be multilayer-coated sequentially or simultaneously. Air doctor coating, blade coating, rod coating, extrusion coating, air knife coating, squeeze coating, immersion coating, reverse roll coating, transfer roll coating, gravure coating, kiss coating, cast coating, spray coating and spin coating can be used for magnetic layer coating. Regarding these methods, e.g., Saishin Coating Gijutsu (The Latest Coatin Techniques), Sogo Gijutsu Center Co. (May 31, 1983) can be referred to. When a magnetic recording medium having two or more layers on one side of a support is manufactured, e.g., the following methods can be used.

(1) A method of coating a lower layer by any of gravure coating, roll coating, blade coating, and extrusion coating apparatus, which are ordinarily used in the coating of a magnetic coating solution, and then coating an upper layer while the lower layer is still wet by means of the support-pressing type extrusion coating apparatus disclosed, e. g., in JP-B-1-46186 (the term "JP-B" as used herein means an "examined Japanese patent publication"), JP-A-60-238179 and JP-A-2-265672.
(2) A method of coating an upper layer and a lower layer almost simultaneously by using the coating head equipped with two slits for feeding coating solution disclosed in JP-A-63-88080, JP-A-2-17971 and JP-A-2-265672.
(3) A method of coating an upper layer and a lower layer almost simultaneously by using the extrusion coating apparatus equipped with a backup roll disclosed in JP-A-2-174965.

The coated magnetic layer is dried after the ferromagnetic powder contained in the magnetic layer has been subjected to magnetic field orientation treatment. The magnetic field orientation treatment can be arbitrarily performed by well-known methods. After being dried, the magnetic layer is subjected to surface smoothing treatment by, e.g., super calender rolls. The holes generated by the removal of the solvent by drying vanish by the surface smoothing treatment and the packing rate of the ferromagnetic powder in the magnetic layer is improved. As a result, a magnetic recording medium having high electromagnetic characteristics can be obtained. As the rolls for calendering treatment, heat resisting plastic rolls, e.g., epoxy, polyimide, polyamide and polyamideimide are used. Metal rolls may also be used for the treatment.

It is preferred for the magnetic recording medium of the invention to have smooth surface. For obtaining smooth surface, it is effective to subject the magnetic layer which has been formed by selecting a specific binder as described above to calendering treatment. The calendering treatment is preferably performed at the temperature of the calender rolls of from 60 to 100°C, preferably from 70 to 100°C, and particularly preferably from 80 to 100°C, and the pressure of from 100 to 500 kg/cm (from 98 to 490 kA/m), preferably from 200 to 450 kg/cm (from 196 to 441 kA/m) , and particularly preferably from 300 to 400 kg/cm (from 294 to 392 kA/cm). The obtained magnetic recording medium can be used by being cut to a desired size with a cutter and the like. The magnetic recording medium having been subjected to calendering treatment is generally heat-treated. In recent years, the reduction of a heat shrinkage factor is regarded as important for the linearity (the security of off-track margin) of a high density magnetic recording tape. In particular, with the trend of narrowing a track width, it is required to hold down a heat shrinkage factor in the machine direction under the use atmosphere to 0.07% or less. As the means of reducing a heat shrinkage factor, a method of heat-treating a magnetic recording medium in a web state while handling with low tension, and a method of heat-treating a magnetic recording medium in a laminated state such as the case of bulk or encasing in a cassette (thermo-treatment) are known. When the formed method is used, the concavities and convexities in a backing layer are hardly impressed on a magnetic layer, but a heat shrinkage factor cannot be greatly reduced. Although a heat

shrinkage factor is somewhat dependent on annealing temperature, residence time, a tape thickness and handling tension, a heat shrinkage factor after 48 hours at 70°C is at most from 0.1 to 0.12%. The latter thermo-treatment can widely hold down a heat shrinkage factor, but output reduction and noise increase are caused in some cases by surface roughening of a magnetic layer due to considerable impression of the concavities and convexities of a backing layer onto a magnetic layer.

By adopting the constitution of the magnetic recording medium of the present invention, a highly elastic layer not accompanied by plastic deformation can be formed, therefore, the present invention can provide a magnetic recording medium showing high output and low noise by thermo-treatment. This is particularly conspicuous when the above polyurethane resins are used. The heat shrinkage factor in the machine direction of the magnetic recording tape of the invention after 48 hours at 70°C is 0 .12% or less . The heat shrinkage factor is obtained by hanging 0.2 g of a load from one end of a tape having a size of 8 mm width x 10 cm and preserving at 70°C for 48 hours, and dividing the changed amount of the tape length after preservation by the tape length before preservation (10 cm).

Since the surface of a backing layer can be smoothed in the magnetic recording medium of the present invention, the friction coefficient of the backing layer can be set at a properly great value, by which the friction coefficient between the backing layer and the magnetic layer becomes high, and so the wound form of a magnetic recording medium onto a roll, a slit pancake, or a built-in reel makes a good appearance even when the magnetic recording medium is handled at high speed in manufacturing. Similarly, the wound form of a tape on a reel after rapid traverse of a video cassette recorder (VCR) or rewinding at high speed makes a good appearance.

## EXAMPLES

The present invention will be described in detail below with reference to specific examples. The ingredients, ratios and methods described in the following examples can be arbitrarily changed unless they depart from the spirit and scope of the present invention. Accordingly, the present invention is not limited to the specific examples shown below.

### EXAMPLE 1

#### Production of Magnetic Recording Tape:

Ingredients a of the magnetic layer-forming coating solution shown in Table 1 were kneaded in an open kneader and then dispersed with a sand mill. Ingredient b was added to the obtained dispersion solution, further ingredient c was added, and the solution was filtered through a filter having an average pore diameter of 1 μm, thereby a magnetic layer-forming coating solution was obtained.

Ingredients d of the nonmagnetic layer-forming coating solution shown in Table 2 were kneaded in an open kneader and then dispersed with a sand mill. Ingredient e was added to the obtained dispersion solution, further ingredient f was added, and the solution was filtered through a filter having an average pore diameter of 1 μm, thereby a nonmagnetic layer-forming coating solution was obtained.

Ingredients g of the backing layer-forming coating solution A shown in Table 3 were kneaded and then dispersed with a sand mill. Ingredient h was added to the obtained dispersion solution, and the solution was filtered through a filter having an average pore diameter of 1 μm, thereby a backing layer-forming coating solution in Example 1 was obtained.

The prepared nonmagnetic layer-forming coating solution was coated on a polyethylene naphthalate support (magnetic layer side Ra: 1.4 nm, backing layer side Ra: 3 nm) having a thickness of 5.2 μm in a dry thickness of 1.5 μm, and immediately after that the magnetic layer-forming coating solution was coated in a dry thickness of 0.07 μm. While the magnetic layer-forming coating solution was still wet, the magnetic layer was subjected to magnetic field orientation with a magnet of 3,000 Gauss and dried. The backing layer-forming coating solution was coated in a dry thickness shown in Table 6 below and dried. After drying, the magnetic layer was subjected to calendering treatment with the calender of seven stages of metal rolls by passing the web between the nips of metal rolls six times (velocity: 100 m/min, linear pressure: 300 kg/cm, temperature: 90°C) . The web was subjected to thermo-treatment at 70°C for 48 hours, and slit in a width of 6.35 mm, thereby a magnetic recording tape of Example 1 was obtained.

TABLE 1

| Composition of Magnetic Layer-Forming Coating Solution | | |
|---|---|---|
| Ingredient | | Mass Parts |
| a | Ferromagnetic metal powder (Note 1) | 100 |

TABLE 1 (continued)

| Composition of Magnetic Layer-Forming Coating Solution | | |
|---|---|---|
| Ingredient | | Mass Parts |
| a | Polyurethane resin A (Note 2) | 18 |
| a | Phenylphosphonic acid | 5 |
| a | $\alpha$-$Al_2O_3$ (average particle size: 0.15 μm) | 10 |
| a | Carbon black (average particle size: 80 nm) | 0.5 |
| a | Butyl stearate | 1 |
| a | Stearic acid | 1 |
| a | MEK | 120 |
| a | Cyclohexanone | 60 |
| b | Polyisocyanate (Collonate L) | 5 |
| c | MEK/cyclohexanone (1/1 mixed solvent) | 40 |

Note 1: Fe/Co: 100/30 (atomic ratio), Fe/Al: 100/11 (atomic ratio), coercive force (Hc): 192 kA/m (2,430 Oe), crystallite size: 110 angstroms, saturation magnetization moment (σs): 110 $A\cdot m^2/kg$, average long axis length : 0.045 μm, average acicular ratio (arithmetic mean of acicular ratios): 5.5
Note 2: Number average molecular weight: 36,000, Tg: 94°C, $-SO_3Na$ group: 6 μeq/g

| Synthesis composition: | |
|---|---|
| Hydrogenated bisphenol A | 0.6 mol |
| Polypropylene oxide adduct of bisphenol A | 0.3 mol |
| Na salt of bis(2-hydroxyethyl)-5-sulfoisophthalate | 0.05 mol |
| Diphenylmethane diisocyanate | 1.0 mol |
| Trimethylolpropane | 0.05 mol |

TABLE 2

| Composition of Nonmagnetic Layer-Forming Coating Solution | | |
|---|---|---|
| Ingredient | | Mass Parts |
| d | Acicular hematite (Note 3) | 80 |
| d | Polyurethane resin A (Note 2) | 20 |
| d | Phenylphosphonic acid | 5 |
| d | $\alpha$-$Al_2O_3$ (average particle size: 0.15 μm) | 10 |
| d | Carbon black (average particle size: 80 nm) | 20 |
| d | Butyl stearate | 1 |
| d | Stearic acid | 1 |
| d | MEK | 120 |
| a | Cyclohexanone | 80 |
| e | Polyisocyanate (Collonate L) | 5 |
| f | MEK/cyclohexanone (1/1 mixed solvent) | 40 |

Note 3: Average long axis length: 0.15 μm, average acicular ratio: 8, $S_{BET}$ : 52 $m^2/g$, Surface-covering compound: $Al_2O_3/SiO_2$ Note 4: DBP oil absorption amount: 120 ml/100 g, pH: 8, $S_{BET}$: 52 $m^2/g$

TABLE 3

| Composition of Backing Layer-Forming Coating Solution A | | |
|---|---|---|
| Ingredient | | Mass Parts |
| g | Nonmagnetic inorganic particles (shown in Table 6) | Y |
| g | Polyurethane resin B (Note 5) | 20 |
| g | Phenylphosphonic acid | 5 |
| g | Abrasive (shown in Table 6) | 5 |
| g | Carbon black (shown in Table 6) | X |
| g | Carbon black (average particle size: 80 nm) | 5 |
| g | Stearic acid | 3 |
| g | MEK | 120 |
| g | Cyclohexanone | 120 |
| h | Polyisocyanate (Collonate L) | 5 |
| h | MEK/cyclohexanone (1/1 mixed solvent) | 80 |
| Note: X + Y = 100<br>Note 5: Number average molecular weight: 45,000, Tg: 105°C, $-SO_3Na$ group: 6 μeq/g | | |

Synthesis composition:

| | |
|---|---|
| Hydrogenated bisphenol A | 0.5 mol |
| Polypropylene oxide adduct of bisphenol A | 0.4 mol |
| Na salt of bis(2-hydroxyethyl)-5-sulfoisophthalate | 0.05 mol |
| Diphenylmethane diisocyanate | 1.0 mol |
| Trimethylolpropane | 0.05 mol |

EXAMPLES 2 TO 7 AND COMPARATIVE EXAMPLES 1 TO 3

Magnetic tapes having various backing layers were prepared in the same manner as in Example 1 except for changing each element shown in Table 6. In Table 6, in the case where hematite is used as the nonmagnetic inorganic particles, the ones in Examples 1, 5, 6 and 7 are the same as Note 3 in Table 2. In the carbon black in Table 6, the ones in Examples 1, 2 and 3 are the same as Note 4 in Table 2.

The following backing layer-forming coating solution was also used.

TABLE 4

| Composition of Backing Layer-Forming Coating Solution B | | |
|---|---|---|
| Ingredient | | Mass Parts |
| i | Carbon black (average particle size: 15 nm) | 97 |
| i | Carbon black (average particle size: 250 nm) | 3 |
| i | Nitrocellulose resin | 110 |
| i | Polyurethane resin B (Note 6) | 30 |
| i | Calcium carbonate | 10 |
| i | Stearic acid | 1 |
| i | MEK | 60 |

TABLE 4 (continued)

| Composition of Backing Layer-Forming Coating Solution B | | |
|---|---|---|
| Ingredient | | Mass Parts |
| i | Cyclohexanone | 180 |
| j | Polyisocyanate (Collonate L) | 20 |
| k | MEK/cyclohexanone (1/1 mixed solvent) | 1,500 |
| Note 6: Number average molecular weight: 13,000, Tg: 33°C | | |

Synthesis composition:

| | |
|---|---|
| Butanediol | 1.7 mol |
| Neopentyl glycol | 0.6 mol |
| Adipic acid | 1.3 mol |
| Diphenylmethane diisocyanate | 1.0 mol |

Ingredients i of the backing layer-forming coating solution B shown in Table 4 were kneaded and then dispersed with a sand mill. Ingredient j was added to the obtained dispersion solution, further ingredient k was added, and the solution was filtered through a filter having an average pore diameter of 1 µm, thereby a backing layer-forming coating solution in Comparative Example 1 was obtained.

Backing layer-forming coating solution C:

Polyurethane resin A was used in place of polyurethane resin B in the composition of the backing layer-forming coating solution A.

Backing layer-forming coating solution D:

Polyurethane resin D shown below was used in place of polyurethane resin B in the composition of the backing layer-forming coating solution A.

Synthesis composition of polyurethane resin D:

| | |
|---|---|
| Hydrogenated bisphenol A | 0.3 mol |
| Polypropylene oxide adduct of bisphenol A | 0.6 mol |
| Na salt of bis(2-hydroxyethyl)-5-sulfoisophthalate | 0.05 mol |
| Diphenylmethane diisocyanate | 1.0 mol |
| Trimethylolpropane | 0.05 mol |

Backing layer-forming coating solution E:

Polyurethane resin E shown below was used in place of polyurethane resin B in the composition of the backing layer-forming coating solution A.

Synthesis composition of polyurethane resin E:

| | |
|---|---|
| Butanediol | 0.6 mol |
| Polypropylene oxide adduct of bisphenol A | 0.3 mol |

(continued)

| | |
|---|---|
| Na salt of bis(2-hydroxyethyl)-5-sulfoisophthalate | 0.05 mol |
| Diphenylmethane diisocyanate | 1.0 mol |
| Trimethylolpropane | 0.05 mol |

TABLE 5

| Composition of Backing Layer-Forming Coating Solution F | | |
|---|---|---|
| Ingredient | | Mass Ratio |
| g | Particulate $TiO_2$ | 80 |
| g | Polyurethane resin A (Note 2) | 6 |
| g | Vinyl chloride resin (MR-110) | 12 |
| g | Phenylphosphonic acid | 5 |
| g | $\alpha$-$Al_2O_3$ (average particle size: 0.18 μm) | 5 |
| g | Carbon black (shown in Table 6) | 20 |
| g | Carbon black (average particle size: 80 nm) | 5 |
| g | Stearic acid | 3 |
| g | MEK | 120 |
| g | Cyclohexanone | 120 |
| h | Polyisocyanate (Collonate L) | 5 |
| h | MEK/cyclohexanone (1/1 mixed solvent) | 80 |

The following tests and measurement were performed with each of the prepared magnetic recording tapes.

Tests and measuring methods:

(1) Measurement of C/N ratio

Measurement was performed by attaching to a drum tester a recording head (MIG, gap length: 0.15 μm, a track breadth: 18 μm, 1.8 T) and an MR head for reproduction (a shield type head, gap length between shields: 0.2 μm, a track breadth: 4 μm)

Single frequency signals were recorded at relative speed of head-medium of 10 m/min and recording wavelength of 0.2 μm (50 MHz) , and the reproduced signals were analyzed by frequency with a spectrum analyzer (a product manufactured by Shibasoku K.K.), and the ratio of the output voltage of the above single frequency signals to the noise voltage 1 MHz apart was taken as a C/N ratio (dB). Bias current was applied to the MR head at reproducing time so that the reproduction output became maximum.

(2) Measurement of friction coefficient of back surface

Each magnetic recording tape was laid over SUS 420J (4 mmφ) at an angle of 180°. The tape was slid with 20 g of a load at a speed of 14 mm/sec, and the friction coefficient was obtained by the following Euler's equation:

$$\mu = (1/\pi)\ln(T2/10)$$

wherein T2 is a sliding resistance value (g).

(3) Evaluation of running durability

The increase of error rates before and after 1, 000 passes of repeated running of a tape (after running/before

running) was measured by DVC-PRO VTR (a product of Matsushita Electric Industrial Co., Ltd.).

(4) Storage stability

A 370 meter length of a tape was wound on a reel for DVC-PRO and preserved under the atmosphere of 60°C 90% RH for a month. The tape was rewound after a month, and the number of adhesion on the overall length was counted.

(5) Tg of backing layer

A backing layer-forming coating solution was coated on a base film in a thickness of 1 μm and dried to thereby prepare a sample. The dynamic visco-elasticity (vibration frequency: 110 Hz) of the sample was measured by Rheovibron (a product of Orientec Co. (former Toyo Baldwin)). The dynamic visco-elasticity of the base film alone was also measured, and E" peak obtained by subtracting the latter value from the former value was taken as Tg.

The results obtained are shown in the following Table 6.

**TABLE 6**

| Sample | | | Ex. 1 | Ex. 2 | Ex. 3 | Ex. 4 | Ex. 5 |
|---|---|---|---|---|---|---|---|
| Backing Layer-Forming Coating Solution | Kind | | A | C | D | A | A |
| | Nonmagnetic inorganic particles | Kind | Hematite | Hematite | Hematite | $TiO_2$ | Hematite |
| | | Average acicular ratio | 8 | 4 | 12 | 8 | 8 |
| | Carbon black | Average particle size (nm) | 16 | 16 | 16 | 20 | 20 |
| | Nonmagnetic inorganic particles/carbon black (mass ratio) | | 80/20 | 65/35 | 90/10 | 85/15 | 80/20 |
| | Kind of polyurethane | | B | A | D | B | B |
| | Tg of polyurethane (°C) | | 105 | 94 | 132 | 105 | 105 |
| | Abrasive | Kind | α-Alumina | α-Alumina | α-Alumina | α-Alumina | α-Alumina |
| | | Average particle size (μm) | 0.18 | 0.13 | 0.13 | 0.2 | 0.2 |
| Tg of backing layer (°C) | | | 112 | 90 | 135 | 108 | 113 |
| Thickness of backing layer d (μm) | | | 0.5 | 0.5 | 0.8 | 0.6 | 0.4 |
| r/d | | | 0.36 | 0.26 | 0.16 | 0.33 | 0.5 |
| C/N (dB) | | | 4.5 | 3.8 | 3.6 | 4.2 | 2.2 |
| Friction coefficient of back surface | 1 pass | | 0.17 | 0.2 | 0.15 | 0.17 | 0.15 |
| | 1,000 passes | | 0.19 | 0.21 | 0.18 | 0.19 | 0.15 |
| Increase of error rate | | | 1.5 | 1.8 | 2.1 | 1.7 | 1.2 |
| Storage stability | | | 0 | 0 | 0 | 0 | 0 |

TABLE 6 (cont'd)

| Sample | | | Ex. 6 | Ex. 7 | Comp. Ex. 1 | Comp. Ex. 2 | Comp. Ex. 3 |
|---|---|---|---|---|---|---|---|
| Backing Layer-Forming Coating Solution | Kind | | D | E | B | F | A |
| | Nonmagnetic inorganic particles | Kind | Hematite | Hematite | None | $TiO_2$ | Hematite |
| | | Average acicular ratio | 8 | 8 | - | 1 | 18 |
| | Carbon black | Average particle size (nm) | 20 | 20 | 15 | 20 | 75 |
| | Nonmagnetic inorganic particles/carbon black (mass ratio) | | 80/20 | 80/20 | 0/100 | 85/15 | 50/50 |
| | Kind of polyurethane | | D | E | C | A | B |
| | Tg of polyurethane (°C) | | 132 | 83 | 33 | 94 | 105 |
| | Abrasive | Kind | $TiO_2$ | α-Alumina | None | α-Alumina | α-Alumina |
| | | Average particle size (μm) | 0.035 | 0.18 | | 0.18 | 0.18 |
| Tg of backing layer (°C) | | | 136 | 91 | 65 | 73 | 112 |
| Thickness of backing layer d (μm) | | | 0.4 | 0.5 | | 0.4 | 0.5 |
| r/d | | | 0.07 | 0.36 | - | 0.45 | 0.36 |
| C/N (dB) | | | 3.4 | 2.4 | 0 | 1.3 | 0 |
| Friction coefficient of back surface | 1 pass | | 0.17 | 0.19 | 0.12 | 0.18 | 0.14 |
| | 1,000 passes | | 0.28 | 0.23 | 0.6 or more | 0.21 | 0.14 |
| Increase of error rate | | | 3.1 | 2.7 | 20 | 7 | 12 |
| Storage stability | | | 0 | 5 | 15 times | cut | 0 |

From the results in Table 6, it can be seen that the samples according to the present invention are high in C/N ratio, low in error rate increase, and storage stability is good. Comparative samples are low in C/N ratio as compared

with the samples in the invention , and high in error rate increase.

The present invention can provide a magnetic recording medium excellent in a C/N ratio and running durability by using nonmagnetic inorganic particles having a specific figure and carbon black having a specific size respectively in specific amounts in a backing layer, and adjusting Tg of the backing layer to a specific range, thereby the surface smoothness of the backing layer can be ensured, the setoff of the backing layer to the magnetic layer and the adhesion during storage can be prevented.

This application is based on Japanese Patent application JP 2002-157510, filed May 30, 2002, the entire content of which is hereby incorporated by reference, the same as if set forth at length.

## Claims

1. A magnetic recording medium comprising a magnetic layer, a flexible support and a backing layer in this order, wherein the backing layer comprises: (A) a nonmagnetic inorganic particle having an acicular ratio of from 3 to 15; and (B) a carbon black having an average particle size of from 10 to 50 nm in a mass ratio of (A)/(B) being from 60/40 to 90/10, and the backing layer has a glass transition point of from 80 to 140°C.

2. The magnetic recording medium according to claim 1, wherein the backing layer further comprises an abrasive having a Moh's hardness of 9 or more and having an average particle size of from 10 to 40% based on a thickness of the backing layer.

3. The magnetic recording medium according to claim 1, wherein the backing layer further comprises a polyurethane comprising no chlorine and having a glass transition point of from 80 to 140°C obtained by a reaction of diol having a cyclic structure, diol containing an ether group, or organic diisocyanate.

4. The magnetic recording medium according to claim 1, wherein the nonmagnetic inorganic particle has an acicular ratio of from 4 to 10.

5. The magnetic recording medium according to claim 1, wherein the carbon black has an average particle size of from 10 to 40 nm.

6. The magnetic recording medium according to claim 1, wherein the mass ratio of (A)/(B) is from 70/30 to 90/10.

7. The magnetic recording medium according to claim 1, wherein the backing layer further comprises a lubricant having a melting point of 80°C or lower.

8. The magnetic recording medium according to claim 1, wherein the backing layer further comprises a carbon black having an average particle size of 80 nm or more as a solid lubricant.

9. The magnetic recording medium according to claim 8, wherein the carbon black having an average particle size of 80 nm or more is in an amount of from 0.1 to 10 mass parts based on 100 mass parts of a total amount of the components (A) and (B).

10. The magnetic recording medium according to claim 8, wherein the carbon black having an average particle size of 80 nm or more is in an amount of from 0.3 to 5 mass parts based on 100 mass parts of a total amount of the components (A) and (B).